# EUROPÄISCHE PATENTSCHRIFT

(11) **EP 1 840 626 B1**
(45) Veröffentlichungstag und Bekanntmachung des Hinweises auf die Patenterteilung: **11.05.2016**
(21) Anmeldenummer: 07006337.5
(22) Anmeldetag: 28.03.2007
(51) Int. Cl.: G02B 6/00, F21V 8/00, G02F 1/1335, G02B 27/01

(54) **Head-up Display, Kraftfahrzeug und Verfahren zum Betrieben eines Head-up Displays**
Head-up display, motor vehicle und method for operating a head-up display
Visionneur tête haute, véhicule automobile et procédé de fonctionnement d'un visionneur tête haute

(30) Priorität: 29.03.2006 DE 102006014394
(43) Veröffentlichungstag der Anmeldung: 03.10.2007
(73) Patentinhaber: GM Global Technology Operations LLC, Detroit, MI 48265-3000 (US)
(72) Erfinder: Böhme, Aiko, 55218 Ingelheim (DE); Brandt, Peter, 63739 Aschaffenburg (DE); Charle, Heiko, 65428 Rüsselsheim (DE)
(74) Vertreter: Daniel, Ulrich W.P.

(56) Entgegenhaltungen:
- EP-A- 0 570 037
- EP-A- 0 707 408
- EP-A1- 1 143 288
- EP-A1- 1 413 470
- EP-A1- 1 767 986
- WO-A-2005/045793
- DE-A1-102004 007 802

## Beschreibung

Die Erfindung betrifft ein Head-up Display gemäß dem Oberbegriff des Anspruchs 1. Ferner betrifft die Erfindung ein Kraftfahrzeug mit einem solchen Head-up Display. Darüber hinaus betrifft die Erfindung ein Verfahren zum Betreiben eines Head-up Displays gemäß dem Oberbegriff des Anspruchs 9.

Ein sogenanntes Head-up Display (HUD) ist ein Anzeigesystem, bei dem für einen Nutzer, z.B. einen Autofahrer oder einen Pilot eines Flugzeugs, Informationen in sein Sichtfeld projiziert werden. Für Piloten existieren solche Systeme bereits seit den 40er Jahren des 20. Jahrhunderts und wurden seinerzeit als Reflexvisiere bezeichnet.

Ein Head-up Display umfasst im Allgemeinen eine Anzeigevorrichtung und eine Optikvorrichtung, die mit einem sogenannten Combiner zusammen wirken. Die Anzeigevorrichtung erzeugt ein Bild, woraus die Optikvorrichtung, z.B. umfassend eine Linse und einen Hohlspiegel, ein virtuelles Bild erzeugt, das der Fahrer oder Pilot in einer spiegelnden, lichtdurchlässigen Scheibe, dem Combiner, sieht. Der Combiner überlagert somit das virtuelle Bild mit den durch den Combiner hindurchscheinenden Informationen der Umwelt.

Wird ein Head-up Display in ein Kraftfahrzeug eingebaut, so wird in der Regel die Windschutzscheibe des Kraftfahrzeugs als Combiner verwendet.

Für eine relativ gute Ablesbarkeit des virtuellen Bildes sollte die Anzeigevorrichtung nicht nur ein ausreichend helles, sondern möglichst auch ein farbiges Bild erzeugen.

Die EP 1 143 288 A1 offenbart ein Head-up Display, bei dem das Licht einer Lichtquelle durch einen Flüssigkristallbildschirm (LCD) gesendet und das auf dem Flüssigkristallbildschirm sichtbare Bild als virtuelles Bild auf der Windschutzscheibe eines Kraftfahrzeugs projiziert wird. Die Lichtquelle umfasst eine Mehrzahl von auf einem gemeinsamen Träger angeordneten roten, blauen und grünen Leuchtdioden.

Der EP 0 570 037 A1 ist ein weiteres Head-up Display zu entnehmen, dass eine monochrome oder eine mehrfarbige Anzeigevorrichtung umfasst.

Ein gattungsgemäßes Head-up Display ist aus der EP 1 413 470 A1 bekannt. Das Display hat eine monochrome LCD-Anzeigevorrichtung.

Eine Anzeigevorrichtung, die zwischen zwei Betriebsmodi schaltbar ist, ist aus der WO 2005/045793 A bekannt. Aus der EP 0 707 408 A ist ein optischer Scanner mit einer Beleuchtung und mehreren LEDs verschiedener Farben bekannt.

Die Aufgabe der vorliegenden Erfindung ist es, ein in der Fertigung relativ kostengünstiges Head-up Display bereit zu stellen, dessen Bild verschieden farbig ist. Diese Aufgabe wird mit einem Head-up Display gelöst, welches die Merkmale des Anspruchs 1 aufweist. Ferner wird diese Aufgabe mit einem Kraftfahrzeug mit den Merkmalen des Anspruchs 8 und mit einem Verfahren mit den Merkmalen des Anspruchs 9 gelöst.

Ein Head-up Display der Erfindung hat eine Anzeigevorrichtung zum Erzeugen eines Bildes und eine Optikvorrichtung zum Erzeugen eines virtuellen Bildes aus dem Bild der Anzeigevorrichtung, wobei die Anzeigevorrichtung eine Anzeige und eine für ein Hinterleuchten der Anzeige vorgesehene Hintergrundbeleuchtung aufweist und die Hintergrundbeleuchtung eine Licht mit einer ersten Farbe abgebende erste Lichtquelle, eine Licht mit einer zweiten Farbe abgebende zweite Lichtquelle, einen mit der ersten Lichtquelle gekoppelten ersten Lichtleiter und einen mit der zweiten Lichtquelle gekoppelten zweiten Lichtleiter aufweist, wobei die beiden Lichtleiter derart dicht nebeneinander hinter der Anzeige der Anzeigenvorrichtung angeordnet sind, dass sie die gesamte Anzeige flächenhaft und einen dem ersten Lichtleiter zugeordneten Bereich der Anzeige mit der ersten Farbe und einen den zweiten Lichtleiter zugeordneten Bereich der Anzeige mit der zweiten Farbe hinterleuchten. Dadurch ist es möglich, die beiden Bereiche mit voneinander verschiedenen Farben zu hinterleuchten und gleichzeitig die gesamte Anzeige flächenhaft zu hinterleuchten, ohne dass sich die Beleuchtungen der beiden Bereiche wenn, dann nur kaum gegenseitig beeinflussen. Somit sind Voraussetzungen geschaffen, ein verschieden farbiges Bild mit der relativ kostengünstig herstellbaren Anzeigevorrichtung zu erzeugen, was wiederum eine Voraussetzung zum Erzeugen eines verschieden farbigen virtuellen Bildes ist. Unter einem Bild bzw. einem projizierten Bild wird jegliche Art angezeigter Information, also auch Zahlen, Buchstaben oder Symbole, verstanden.

Um die Gefahr einer Beeinflussung der beiden Bereiche zu verringern, ist es vorgesehen, dass die beiden Lichtleiter durch eine lichtundurchlässige und/oder lichtreflektierende Schicht voneinander getrennt sind. Die Schicht ist beispielsweise eine dünne Folie oder kann bevorzugt mittels Farbdruck aufgebracht werden.

Die beiden Farben können verschieden, identisch und/oder einstellbar sein.

Wenn nach einer Ausführungsform des erfindungsgemäßen Head-up Displays als Anzeige ein Flüssigkristallbildschirm verwendet wird, dann kann das Head-up Display besonders preisgünstig hergestellt werden.

Besonders attraktiv kann das erfindungsgemäße Head-up Display ausgeführt werden, wenn nach einer Variante wenigstens einer der Teillichtleiter die Form eines Symbols hat. Ein solches Symbol ist z.B. ein Markenzeichen.

Das erfindungsgemäße Head-up Display wird insbesondere bei einem Kraftfahrzeug, z.B. als Kombiinstrument zum Anzeigen von verschiedenen Fahrzeugparametern, verwendet. Bei der Verwendung in dem Kraftfahrzeug kann das erfindungsgemäße Head-up Display insbesondere zum Durchführen eines Verfahrens mit folgenden Verfahrensschritten verwendet werden:
- Einkoppeln von Licht der ersten Farbe in den ersten Lichtleiter und in den zweiten Lichtleiter, die derart nebeneinander hinter der Anzeige der Anzeigenvorrichtung angeordnet sind, sodass sie im Wesentlichen die gesamte Anzeige flächenhaft mit der ersten Farbe hinterleuchten, und
- Wechseln der Farbe des eingekoppelten Lichts in den zweiten Lichtleiter von der ersten Farbe auf eine von der ersten Farbe verschiedenen zweiten Farbe aufgrund eines von einer Steuereinrichtung des Fahrzeugs abgegebenen Signals, sodass ein dem ersten Lichtleiter zugeordneter Bereich der Anzeige mit der ersten Farbe und ein dem zweiten Lichtleiter zugeordneter Bereich der Anzeige mit der zweiten Farbe hinterleuchtet wird.

Durch dieses Verfahren ist es möglich, im Wesentlichen die gesamte Anzeige zunächst mit der ersten Farbe zu hinterleuchten. Gibt die Steuereinrichtung das Signal ab, so wechselt die zweite Farbe ihre Farbe, d.h. die Anzeige wird im Bereich des zweiten Lichtleiters mit der zweiten Farbe hinterleuchtet. Aufgrund der beiden Lichtleiter, die durch eine lichtundurchlässige und/oder lichtreflektierende voneinander entkoppelt sind, stört jedoch die zweite Farbe den vom ersten Lichtleiter hinterleuchteten Bereich der Anzeige nicht oder nur kaum. Der von dem zweiten Lichtleiter hinterleuchtete Bereich der Anzeige ist beispielsweise einem Warnsignal zugeordnet, sodass die Steuereinrichtung das Signal abgibt, wenn ein Fahrzeuglenker bzw. eine Fahrzeuglenkerin des Kraftfahrzeugs gewarnt werden soll. Der von dem zweiten Lichtleiter hinterleuchtete Bereich der Anzeige wird daraufhin mit der zweiten Farbe, z.B. Rot, hinterleuchtet.

Mit dem erfindungsgemäßen Head-up Display wird somit u.a. ein Head-up Display mit einer hinterleuchteten Anzeigevorrichtung bereitgestellt, dessen Licht in die beiden Lichtleiter eingekoppelt wird und von diesen hinter der Anzeige, z.B. dem Glas eines Flüssigkristallbildschirms, abgegeben wird. Die Anzeige umfasst mehrere Beleuchtungszonen, die jeweils von einem der beiden Lichtleiter hinterleuchtet werden. Die Lichtleiter sind direkt nebeneinander gefügt. Um die Gefahr eines Lichtübertritts von einem Lichtleiter zum anderen Lichtleiter zu vermeiden, wird bevorzugt an der Trennfläche der beiden Lichtleiter die dünne lichtundurchlässige oder lichtreflektierende Schicht eingefügt. Dies erlaubt insbesondere folgende Nutzung:
Die gesamte Anzeige der Anzeigevorrichtung kann komplett mit seiner üblichen Hinterleuchtungsfarbe genutzt werden. Dazu wird in den beiden Lichtleitern zunächst Licht mit derselben Farbe eingekoppelt. Die gesamte Anzeige wird dann im Wesentlichen mit dieser Farbe hinterleuchtet. Wenn eine Warnanzeige z.B. in der Farbe Rot dargestellt werden soll, wird das zugehörige Symbol in dem Bereich des zweiten Lichtleiters erzeugt. Nur in diesem Bereich wird dann die rote anstelle der gelben Hinterleuchtung aktiviert, indem in den zweiten Lichtleiter ein rotes Licht eingekoppelt wird.

Da die Trennfläche zwischen den beiden Lichtleitern relativ dünn ausgeführt werden kann, wird die gesamte Anzeige der Anzeigevorrichtung im Wesentlichen über die gesamte Fläche gleichmäßig hinterleuchtet, wenn in beiden Lichtleitern ein Licht derselben Farbe eingekoppelt wird.

Ein Head-up Display der Erfindung hat eine Anzeigenvorrichtung zum Erzeugen eines Bildes und eine Optikvorrichtung zum Erzeugen eines virtuellen Bildes aus dem Bild der Anzeigevorrichtung, wobei die Anzeigevorrichtung einen ersten Lichtleiter, einen zweiten Lichtleiter, eine erste Lichtquelle, die Licht mit einer ersten Farbe in den ersten Lichtleiter einkoppelt, und eine zweite Lichtquelle, die Licht mit einer zweiten Farbe in den zweiten Lichtleiter einkoppelt, aufweist, wobei die beiden Lichtleiter derart dicht nebeneinander angeordnet sind, dass sie im Wesentlichen eine als Anzeigefläche ausgebildete Fläche bilden, und durch eine lichtundurchlässige und/oder lichtreflektierende Schicht voneinander getrennt sind. Durch die lichtabsorbierende bzw. lichtreflektierende Schicht, die bevorzugt eine dünne Folie ist oder mittels Farbdruck aufgebracht wird, wird einerseits ein Überlappen von zwei verschiedenfarbigen, in die beiden Lichtleiter eingekoppelte Lichter verhindert und andererseits ergibt sich eine optisch durchgehende Anzeigeoberfläche, die durch keine nichtbeleuchteten Begrenzungen durchbrochen wird.

Aufgrund der erfindungsgemäßen Lichtleiterstruktur ergibt sich trotz Verwendung der "monochromen" Anzeige ein verschieden farbiges Bild.

Es ergeben sich Kostenvorteile aufgrund der Verwendung einer monochromen Anzeigevorrichtung für ein Head-up Display zur Visualisierung von Farbinformationen. Im Vergleich zu gewöhnlichen farbigen Anzeigevorrichtungen kann die Hintergrundbeleuchtung für die erfindungsgemäßen Head-up Displays weniger stark leuchtend ausgeführt werden, da eine monochrome Anzeige eine relativ große Transmission aufweist. Dies wirkt sich positiv auf den Preis der verwendeten Lichtquelle aus.

Aufgrund der höheren Transmission der monochromen Anzeige sind Vorraussetzungen für ein relativ helles Bild und daher für ein relativ helles virtuelles Bild gegeben.

Bestimmte Symbole, wie z.B. ein Warnsymbol, Kreise oder Kurven, können fest in der Lichtleiterstruktur hinterlegt werden. Dadurch kann eine monochrome Anzeige mit einer relativ geringen Auflösung verwendet werden, wodurch wiederum Kosten gespart werden können.

Es ergibt sich eine relativ einfache Skalierung des Farbumfangs der erfindungsgemäßen Head-up Displays.

Ausführungsbeispiele der Erfindung sind in den beigefügten schematischen Zeichnungen exemplarisch dargestellt. Es zeigen:
- Figur 1: Einen Personenkraftwagen,
- Figur 2: einen Teil des Personenkraftwagens der Fig. 1 mit einem Headup Display,
- Figuren 3, 4: die Anzeigevorrichtung des Head-up Displays der Fig. 2 und
- Figur 5: eine weitere Anzeigevorrichtung für das Head-up Display der Fig. 2.

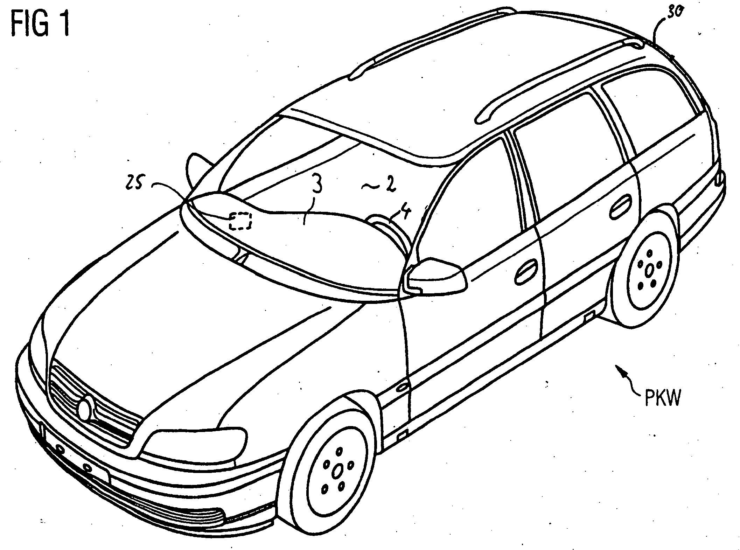

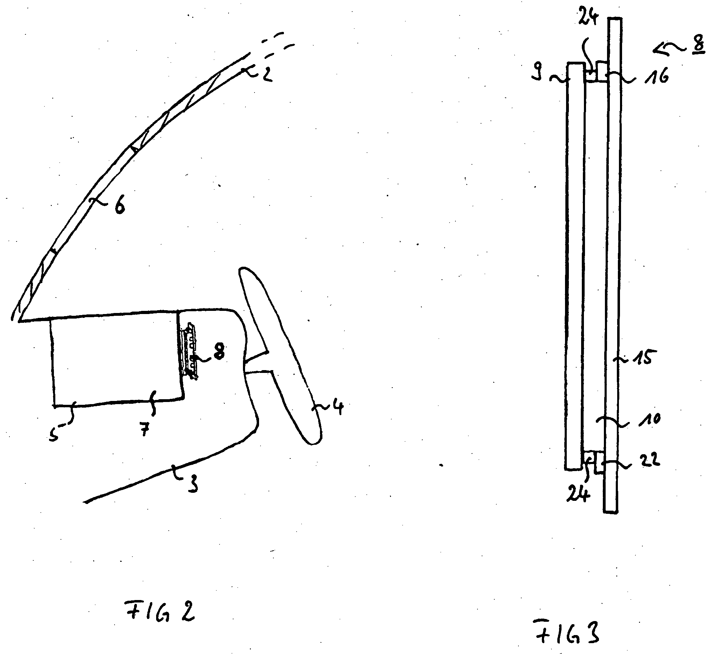

Die Fig. 1 zeigt einen Personenkraftwagen PKW mit einer Windschutzscheibe 2 und einem Armaturenbrett 3, an dem ein Lenkrad 4 angeordnet und in dem im Falle des vorliegenden Ausführungsbeispiels ein in den Figuren 2 bis 4 näher dargestelltes Head-up Display 5 befestigt ist. Das Head-up Display 5 ist dafür vorgesehen, in einem Projektionsbereich 6 der Windschutzscheibe 2 ein Bild zu projizieren.

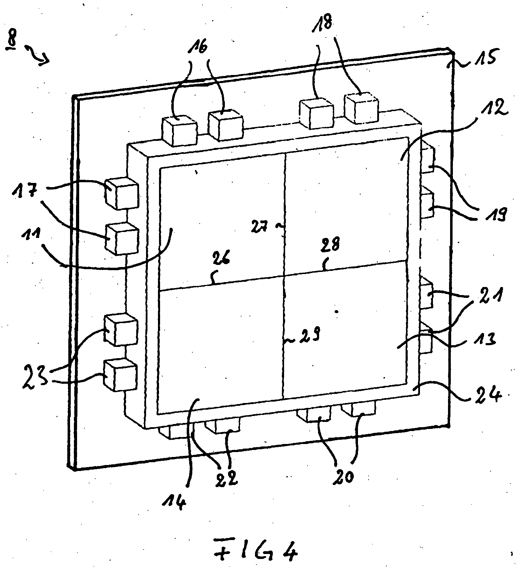

Das Head-up Display 5 umfasst eine Optikvorrichtung 7 und eine in den Figuren 3 und 4 näher dargestellte Anzeigevorrichtung 8 zum Erzeugen eines Bildes. Das von der Anzeigevorrichtung 8 erzeugte Bild wird in die Optikvorrichtung 7 eingekoppelt, die daraufhin in Allgemein bekannter Weise, wie es z.B. aus der EP 1 143 288 A1 bekannt ist, aus dem Bild der Anzeigevorrichtung 8 ein auf den Projektionsbereich 6 der Windschutzscheibe 2 projiziertes virtuelles Bild erzeugt. Die Optikvorrichtung 7 umfasst z.B. eine Linse und einen Hohlspiegel.

Der Projektionsbereich 6 befindet sich im Sichtbereich eines nicht näher dargestellten Fahrzeuglenkers bzw. einer nicht näher dargestellten Fahrzeuglenkerin des Personenkraftwagens PKW, sodass der Projektionsbereich 6 das virtuelle Bild mit den durch die Windschutzscheibe 2 hindurchscheinenden Informationen der Umwelt überlagert. Im Falle des vorliegenden Ausführungsbeispiels ist das Head-up Display 5 dafür vorgesehen, den Fahrzeuglenker bzw. die Fahrzeuglenkerin über Fahrzeugparameter des Personenkraftwagens PKW zu informieren.

Die Anzeigevorrichtung 8 umfasst im Falle des vorliegenden Ausführungsbeispiels einen Flüssigkristallbildschirm 9 als Anzeige und eine direkt auf der Rückseite des Flüssigkristallbildschirms 9 angeordnete Hintergrundbeleuchtung zum Hinterleuchten des Flüssigkristallbildschirmes 9. Die Hintergrundbeleuchtung weist im Falle des vorliegenden Ausführungsbeispieles einen Lichtleiter 10 aus Plexiglas auf. Der Lichtleiter 10 weist im Falle des vorliegenden Ausführungsbeispiels vier Teillichtleiter 11-14 auf, die sich gemeinsam im Wesentlichen über die gesamte Fläche der Rückseite des Flüssigkristallbildschirmes 9 erstrecken.

Der Leichtleiter 10 ist auf einer Leiterplatte 15 mit Leuchtdioden 16-23 angeordnet, die jeweils seitlich Licht in den Lichtleiter 10 einkoppeln. Im Falle des vorliegenden Ausführungsbeispiels sind jedem der vier Teillichtleiter 11-14 jeweils vier Leuchtdioden zugeordnet, die verschiedenfarbiges Licht emittieren. Seitlich am ersten Teillichtleiter 11 sind im Falle des vorliegenden Ausführungsbeispiels gelbes Licht emittierende gelbe Leuchtdioden 16 und rotes Licht emittierende Leuchtdioden 17 angeordnet. Seitlich am zweiten Teillichtleiter 12 sind gelbes Licht emittierende gelbe Leuchtdioden 18 und grünes Licht emittierende Leuchtdioden 19 angeordnet. Seitlich am dritten Teillichtleiter 13 sind gelbes Licht emittierende gelbe Leuchtdioden 20 und rotes Licht emittierende Leuchtdioden 21 angeordnet. Seitlich am vierten Teillichtleiter 14 sind gelbes Licht emittierende gelbe Leuchtdioden 22 und grünes Licht emittierende Leuchtdioden 23 angeordnet.

Des Weitern umfasst die Hintergrundbeleuchtung einen Reflektor 24, der seitlich den Lichtleiter 10 einrahmt. Außerdem sind die vier Teillichtleiter 11-14 an denjenigen Grenzflächen, mit denen sich die Teillichtleiter 11-14 jeweils berühren, mit jeweils einer dünnen lichtundurchlässigen Schicht 26-29, die im Falle des vorliegenden Ausführungsbeispieles mittels Farbdruck auf den ersten Teillichtleiter 11 und den dritten Teillichtleiter 13 aufgebracht wurden, entkoppelt.

Die Leuchtdioden 16-23 sind in nicht dargestellter Weise mit einer unterhalb des Armaturenbrettes 3 des Personenkraftwagens PKW angeordneten Steuerungsvorrichtung 25 elektrisch verbunden, die die Leuchtdioden 16-23 einzeln ansteuert. Im Falle des vorliegenden Ausführungsbeispiels kann mittels der Steuerungsvorrichtung 25 die Intensität des emittierenden Lichts der-Leuchtdioden 16-23 eingestellt bzw. können die Leuchtdioden 16-23 ein- und ausgeschaltet werden.

Im Falle des vorliegenden Ausführungsbeispiels kann die Hintergrundbeleuchtung in verschiedenen Betriebszuständen betrieben werden. In einem ersten Betriebeszustand ist es vorgesehen, dass nur die gelben Leuchtdioden 16, 18, 20, 22 von der Steuerungsvorrichtung 25 angesteuert werden und die restlichen Leuchtdioden ausgeschaltet sind. In diesem Betriebszustand wird der gesamte Flüssigkristallbildschirm 9 gelb hinterleuchtet.

In einem zweiten Betriebszustand kann der Fahrzeuglenker bzw. die Fahrzeuglenkerin auch die Hintergrundfarben der den einzelnen Teillichtleitern 11-14 zugeordneten Anzeigeteilflächen des Flüssigkristallbildschirms 9 einstellen. So ist es im Falle des vorliegenden Ausführungsbeispiels vorgesehen, dass die gelben Leuchtdioden 16 des ersten Teillichtleiters 11 ausgeschaltet und dafür die roten Leuchtdioden 17 des ersten Teillichtleiters 11 eingeschaltet sind. Auch ist es möglich, anstelle der gelben Leuchtdioden 18 die grünen Leuchtdioden 19 des zweiten Teillichtleiters 12 einzuschalten, wodurch derjenige Teil des Flüssigkristallbildschirms 9 grün hinterleuchtet wird, der dem zweiten Teillichtleiter 12 zugeordnet ist. Sinngemäß dasselbe gilt für den dritten Teillichtleiter 13 und den vierten Teillichtleiter 14.

Aufgrund der mit den dünnen lichtundurchlässigen Schichten 26-29 beschichteten Grenzflächen, mit denen sich die Teillichtleiter 11-14 jeweils berühren, wird verhindert, dass in einen der Teillichtleiter eingekoppeltes Licht auch in einen der anderen Teillichtleiter eingekoppelt wird.

Im Falle des vorliegenden Ausführungsbeispiels kann das Head-up Display 5 in einem dritten Betriebszustand betrieben werden. Im dritten Betriebszustand sind nur die gelben Leuchtdioden 16, 18, 20, 22 eingeschaltet und die restlichen Leuchtdioden ausgeschaltet. Soll der Fahrzeuglenker bzw. die Fahrzeuglenkerin z.B. auf den dem ersten Teillichtleiter 11 zugeordneten hinterleuchteten Bildinhalt aufmerksam gemacht werden, so schaltet die Steuerungsvorrichtung 25 automatisch die gelben Leuchtdioden 16 des ersten Teillichtleiter 11 aus und die roten Leuchtdioden 17 des ersten Teillichtleiter 11 ein.

Aufgrund der mit den dünnen lichtundurchlässigen Schichten 26-29 beschichteten Grenzflächen, mit denen sich die Teillichtleiter 11-14 jeweils berühren, stört das rote Licht das in den ersten Teillichtleiter 11 eingekoppelt wird, die den restlichen Teillichtleitern 12-14 zugeordneten Teilanzeigeflächen, die den Flüssigkristallbildschirm 9 gelb hinterleuchten, nicht.

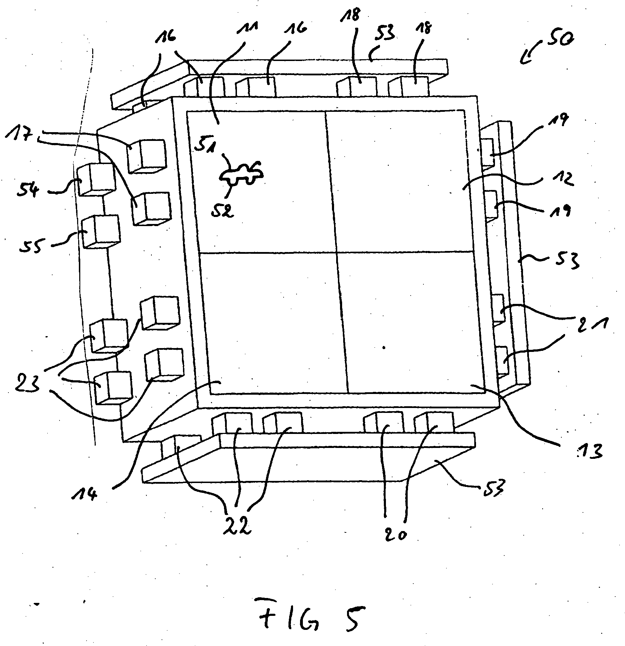

Die Figur 5 zeigt eine weitere Anzeigevorrichtung 50, die anstelle der in den Figuren 2 bis 4 gezeigten Anzeigevorrichtung 8 für das Head-up Display 5 verwendet werden kann. Wenn folgend nicht anders beschrieben, dann sind Bestandteile der in der Figur 5 gezeigten Anzeigevorrichtung 50, die mit Bestandteilen der in den Figuren 2 bis 4 gezeigten Anzeigevorrichtung 8 weitgehend bau- und funktionsgleich sind, mit denselben Bezugszeichen versehen.

Die in der Figur 5 dargestellte Anzeigevorrichtung 50 unterscheidet sich im Wesentlichen von der in den Figuren 2 bis 5 gezeigten Anzeigevorrichtung 8 durch ihre Hintergrundbeleuchtung. Diese umfasst zusätzlich zu den vier Teillichtleitern 11-14 einen fünften Teillichtleiter 51, der in dem ersten Teillichtleiter 11 eingelassen ist und im Falle des vorliegenden Ausführungsbeispiels die Form eines Fahrzeugs mit offener Heckklappe hat. Die Grenzfläche zwischen dem fünften Teillichtleiter 51 und dem ersten Teillichtleiter 11 ist im Falle des vorliegenden Ausführungsbeispiels mit ein lichtundurchlässigen Schicht 52 versehen, die den fünften Teillichtleiter 51 und den ersten Teillichtleiter 11 entkoppeln. Die lichtundurchlässige Schicht 52 wurde mittels Farbdruck auf den fünften Teillichtleiter 51 aufgebracht.

Die Anzeigevorrichtung 50 umfasst neben den mit, der Steuerungsvorrichtung 25 verbundenen Leuchtdioden 16-23, die auf Leiterplatten 53 angeordnet sind, noch eine gelbe Leuchtdiode 54 und eine rote Leuchtdiode 55. Die beiden Leuchtdioden 54, 55 sind dafür vorgesehen, ihr Licht in den fünften Teillichtleiter 51 einzukoppeln, und sind ebenfalls mit der Steuerungsvorrichtung 25 verbunden. Die Steuerungsvorrichtung 25 ist im Fall des vorliegenden Ausführungsbeispiels derart eingerichtet, dass sie die gelbe Leuchtdiode 54 des fünften Teillichtleiters 51 ansteuert, wenn die Heckklappe 30 des Personenkraftwagens PKW verriegelt ist. Dadurch hinterleuchtet der fünfte Teillichtleiter 51 den Flüssigkristallbildschirm 9 gelb. Ist die Heckklappe 30 des Personenkraftwagens PKW dagegen nicht verriegelt, dann steuert die Steuerungsvorrichtung 25 die rote Leuchtdiode 55 an, sodass der fünfte Teillichtleiter 51 den Flüssigkristallbildschirm 9 rot hinterleuchtet. Dadurch erscheint im Projektionsbereich 6 der Windschutzscheibe 2 ein rot erleuchtetes projiziertes Bild eines Fahrzeugs mit geöffneter Heckklappe auf gelben Hintergrund, wenn der erste Teillichtleiter 11 den Flüssigkristallbildschirm gelb hinterleuchtet. Aufgrund der lichtundurchlässigen Schicht 52 des fünften Teillichtleiters 51 stören sich die eingekoppelten Farben des ersten und fünften Teillichtleiters 11, 51 wenn, dann nur unwesentlich, wodurch das projizierte Bild des Fahrzeugs mit offener Heckklappe relativ scharf ist.

Obwohl die vorliegende Erfindung anhand bevorzugter Ausführungsbeispiele beschrieben wurde, ist die Erfindung nicht auf diese beschränkt, sondern auf vielfältige Weise modifizierbar. Insbesondere sind die gewählten Farben der gelben und der roten Leuchtdioden nur exemplarisch zu verstehen. Außerdem können die beiden Lichtleiter 5 und 6 auch durch andere Methoden voneinander entkoppelt sein, beispielsweise durch eine lichtreflektierende Schicht oder eine dünnen Folie. Auch ist es nicht notwendig, dass die beiden Lichtleiter recheckförmig sind. Insbesondere ist es möglich, dass wenigstens einer der beiden Lichtleiter die Form eine Symbols hat, sodass auf dem Flüssigkristallbildschirm ein Symbol mit einer Farbe, die sich von der Farbe restlichen Hintergrundbeleuchtung unterscheidet, erscheint. Es können auch mehr als zwei Lichtleiter verwendet werden.

### Bezugszeichenliste

- 2: Windschutzscheibe
- 3: Armaturenbrett
- 4: Lenkrad
- 5: Head-up Display
- 6: Projektionsbereich
- 7: Optikvorrichtung
- 8: Anzeigevorrichtung
- 9: Flüssigkristallbildschirm
- 10: Lichtleiter
- 11-14: Teillichtleiter
- 15: Leiterplatte
- 16-23: Leuchtdioden
- 24: Reflektor
- 25: Steuerungsvorrichtung
- 26-29: lichtundurchlässige Schicht
- 30: Heckklappe
- 50: Anzeigevorrichtung
- 51: Teillichtleiter
- 52: lichtundurchlässige Schicht
- 53: Leiterplatten
- 54: gelbe Leuchtdiode
- 55: rote Leuchtdiode

- PKW: Personenkraftwagen

## Patentansprüche

1. Head-up Display mit einer Anzeigevorrichtung (8, 50) zum Erzeugen eines Bildes und einer Optikvorrichtung (7) zum Erzeugen eines virtuellen Bildes aus dem Bild der Anzeigevorrichtung (8, 50), wobei die Anzeigevorrichtung (8, 50) eine Hintergrundbeleuchtung (10-14, 16-23, 54, 55) aufweist, **dadurch gekennzeichnet, dass** die Hintergrundbeleuchtung einen ersten Lichtleiter (11-14), einen zweiten Lichtleiter (11-14, 51), eine erste Lichtquelle (16, 18, 20, 22), die Licht mit einer ersten Farbe in den ersten Lichtleiter (11-14) einkoppelt, und eine zweite Lichtquelle (17, 19, 21, 23, 55), die Licht mit einer zweiten Farbe in den zweiten Lichtleiter (11-14, 51) einkoppelt, aufweist, wobei die beiden Lichtleiter (11-14, 51) derart dicht nebeneinander angeordnet sind, dass sie im Wesentlichen eine als Anzeigefläche ausgebildete Fläche bilden, und durch eine lichtundurchlässige und/oder lichtreflektierende Schicht (26-29, 52) voneinander getrennt sind.

2. Head-up Display nach Anspruch 1, **dadurch gekennzeichnet, dass** die Schicht (26-29, 52) eine dünne Folie ist oder mittels Farbdruck aufgebracht wird.

3. Head-up Display nach Anspruch 1 oder 2, **dadurch gekennzeichnet, dass** die beiden Farben verschieden, identisch und/oder einstellbar sind.

4. Head-up Display nach Anspruch 1, **dadurch gekennzeichnet, dass** die Anzeigevorrichtung (8, 50) eine Anzeige und eine für ein Hinterleuchten der Anzeige vorgesehene Hintergrundbeleuchtung (10-14, 16-23, 54, 55) aufweist, wobei die Hintergrundbeleuchtung (10-14, 16-23, 54, 55) die erste Lichtquelle (16, 18, 20, 22), die zweite Lichtquelle (17, 19, 21, 23, 55) den ersten Lichtleiter (11-14) und den zweiten Lichtleiter (11-14, 51) aufweist, wobei die beiden Lichtleiter (11-14, 51) derart dicht nebeneinander hinter der Anzeige der Anzeigenvorrichtung (8, 50) angeordnet sind, dass sie geeignet sind, die gesamte Anzeige flächenhaft und einen dem ersten Lichtleiter (11-14) zugeordneten Bereich der Anzeige mit der ersten Farbe und einen den zweiten Lichtleiter (11-14, 51) zugeordneten Bereich der Anzeige mit der zweiten Farbe zu hinterleuchten.

5. Head-up Display nach Anspruch 4, **dadurch gekennzeichnet, dass** Farben verschieden, identisch und/oder einstellbar sind.

6. Head-up Display nach Anspruch 4 oder 5, **dadurch gekennzeichnet, dass** die Schicht (26-29, 52) eine dünne Folie ist oder mittels Farbdruck aufgebracht wird.

7. Head-up Display nach einem der Ansprüche 5 bis 7, **dadurch gekennzeichnet, dass** die Anzeige ein Flüssigkeitskristallbildschirm (9) ist.

8. Kraftfahrzeug mit einem Head-up Display nach einem der Ansprüche 1 bis 7.

9. Verfahren zum Betreiben eines Head-up Displays (5) nach einem der Ansprüche 1-8 eines Kraftfahrzeugs (PKW), wobei das Head-up Display (5) eine Anzeigevorrichtung (8, 50) zum Erzeugen eines Bildes und eine Optikvorrichtung (7) zum Erzeugen eines virtuellen Bildes aus dem Bild der Anzeigevorrichtung (8, 50) aufweist, **gekennzeichnet durch** folgende Verfahrensschritte:
- Einkoppeln von Licht einer ersten Farbe in einen ersten Lichtleiter (11-14) und in einen zweiten Lichtleiter (11-14, 51), die derart nebeneinander hinter einer das Bild anzeigenden Anzeige der Anzeigenvorrichtung (8, 50) angeordnet sind, dass sie im Wesentlichen die gesamte Anzeige flächenhaft mit der ersten Farbe hinterleuchten, und die **durch** eine lichtundurchlässige (26-29, 52) und/oder lichtreflektierende Schicht voneinander getrennt sind, und
- Wechseln der Farbe des eingekoppelten Lichts in den zweiten Lichtleiter (11-14, 51) von der ersten Farbe auf eine von der ersten Farbe verschiedenen zweiten Farbe aufgrund eines von einer Steuereinrichtung (25) des Fahrzeugs (PKW) abgegebenen Signals, sodass ein dem ersten Lichtleiter (11-14) zugeordneter Bereich der Anzeige mit der ersten Farbe und ein dem zweiten Lichtleiter (11-14, 51) zugeordneter Bereich der Anzeige mit der zweiten Farbe hinterleuchtet wird.

10. Verfahren nach Anspruch 9, **dadurch gekennzeichnet, dass** die Schicht (26-29, 52) eine dünne Folie ist oder mittels Farbdruck aufgebracht wird.

11. Verfahren nach Anspruch 9 oder 10, **dadurch gekennzeichnet, dass** die Anzeige ein Flüssigkristallbildschirm (9) ist.

## Claims

1. A heads-up display having a display device (8, 50) for generating an image and an optics device (7) for generating a virtual image from the image of the display device (8, 50), wherein the display device (8, 50) has a background illumination (10-14, 16-23, 54, 55), **characterized in that** the background illumination has a first optical waveguide (11-14), a second optical waveguide (11-14, 51), a first light source (16, 18, 20, 22), which couples light having a first color into the first optical waveguide (11-14), and a second light source (17, 19, 21, 23, 55), which couples light having a second color into the second optical waveguide (11-14, 51), wherein the two optical waveguides (11-14, 51) are arranged closely adjacent to one another such that they form a surface essentially designed as a display surface, and are separated from one another by a light-opaque and/or light-reflecting layer (26-29, 52).

2. The heads-up display according to Claim 1, **characterized in that** the layer (26-29, 52) is a thin film or is applied by means of color printing.

3. The heads-up display according to Claim 1 or 2, **characterized in that** the two colors are different, identical, and/or adjustable.

4. The heads-up display according to Claim 1, **characterized in that** the display device (8, 50) has a display and a background illumination (10-14, 16-23, 54, 55) provided for backlighting the display, wherein the background illumination (10-14, 16-23, 54, 55) has the first light source (16, 18, 20, 22), the second light source (17, 19, 21, 23, 55), the first optical waveguide (11-14), and the second optical waveguide (11-14, 51), wherein the two optical waveguides (11-14, 51) are arranged closely adjacent to one another behind the display of the display device (8, 50) such that they are capable of backlighting the entire display extensively and a region of the display, which is associated with the first optical waveguide (11-14), using the first color and a region of the display, which is associated with the second optical waveguide (11-14, 51), using the second color.

5. The heads-up display according to Claim 4, **characterized in that** the colors are different, identical, and/or adjustable.

6. The heads-up display according to Claim 4 or 5, **characterized in that** the layer (26-29, 52) is a thin film or is applied by means of color printing.

7. The heads-up display according to any one of Claims 5 to 7, **characterized in that** the display is a liquid crystal display screen (9).

8. A motor vehicle having a heads-up display according to any one of Claims 1 to 7.

9. A method for operating a heads-up display (5), according to any one of Claims 1-8, of a motor vehicle (PKW), wherein the heads-up display (5) has a display device (8, 50) for generating an image and an optics device (7) for generating a virtual image from the image of the display device (8, 50), **characterized by** the following method steps:
- coupling light of a first color into a first optical waveguide (11-14) and into a second optical waveguide (11-14, 51), which are arranged adjacent to one another behind a display, which displays the image, of the display device (8, 50) that they backlight essentially the entire display extensively using the first color, and which are separated from one another by a light-opaque layer (26-29, 52) and/or light-reflecting layer, and
- changing the color of the light coupled into the second optical waveguide (11-14, 51) from the first color to a second color, which is different from the first color, as a result of a signal emitted from a control unit (25) of the vehicle (PKW), so that a region of the display, which is associated with the first optical waveguide (11-14), is backlit using the first color and a region of the display, which is associated with the second optical waveguide (11-14, 51), is backlit using the second color.

10. The method according to Claim 9, **characterized in that** the layer (26-29, 52) is a thin film or is applied by means of color printing.

11. The method according to Claim 9 or 10, **characterized in that** the display is a liquid crystal display screen (9).

## Revendications

1. Afficheur tête haute avec un dispositif d'affichage (8, 50) destiné à générer une image et un dispositif optique (7) destiné à générer une image virtuelle à partir de l'image du dispositif d'affichage (8, 50), dans lequel le dispositif d'affichage (8, 50) possède un éclairage d'arrière-plan (10-14, 26-23, 54, 55), **caractérisé en ce que** l'éclairage d'arrière-plan comprend un premier guide d'ondes lumineuses (11-14), un deuxième guide d'ondes lumineuses (11-14, 51), une première source lumineuse (16, 18, 20, 22) qui injecte de la lumière d'une première couleur dans le premier guide d'ondes lumineuses (11-14) et une deuxième source lumineuse (17, 19, 21, 23, 55) qui injecte de la lumière d'une deuxième couleur dans le deuxième guide d'ondes lumineuses (11-14, 51), les deux guides d'ondes lumineuses (11-14, 51) étant disposés l'un près de l'autre de telle façon qu'ils forment pour l'essentiel une surface conformée comme une surface d'affichage et sont séparés l'un de l'autre par une couche (26-29, 52) qui ne laisse pas passer et/ou ne réfléchit pas la lumière.

2. Afficheur tête haute selon la revendication 1, **caractérisé en ce que** la couche (26-29, 52) est un film mince ou est appliquée par impression à l'encre.

3. Afficheur tête haute selon la revendication 1 ou 2, **caractérisé en ce que** les deux couleurs sont différentes, identiques et/ou réglables.

4. Afficheur tête haute selon la revendication 1, **caractérisé en ce que** le dispositif d'affichage (8, 50) comprend un affichage et un éclairage d'arrière-plan (10-14, 16-23, 54, 55) conçu pour le rétroéclairage de l'affichage, lequel éclairage d'arrière-plan (10-14, 16-23, 54, 55) comprend la première source lumineuse (16, 18, 20, 22), la deuxième source lumineuse (17, 19, 21, 23, 55), le premier guide d'ondes lumineuses (11-14) et le deuxième guide d'ondes lumineuses (11-14, 51), les deux guides d'ondes lumineuses (11-14, 51) étant disposés près l'un de l'autre derrière l'affichage du dispositif d'affichage (8, 50) de sorte qu'ils conviennent pour éclairer par l'arrière l'ensemble de l'affichage sur toute sa surface et une zone de l'affichage associée au premier guide d'ondes lumineuses (11-14) avec la première couleur et une zone de l'affichage associée au deuxième guide d'ondes lumineuses (11-11, 51) avec la deuxième couleur.

5. Afficheur tête haute selon la revendication 4, **caractérisé en ce que** les couleurs sont différentes, identiques et/ou réglables.

6. Afficheur tête haute selon la revendication 4 ou 5, **caractérisé en ce que** la couche (26-29, 52) est un film mince ou est appliquée par impression à l'encre.

7. Afficheur tête haute selon l'une des revendications 5 à 7, **caractérisé en ce que** l'affichage est un écran à cristaux liquides (9).

8. Véhicule à moteur avec un afficheur tête haute selon l'une des revendications 1 à 7.

9. Procédé pour faire fonctionner un afficheur tête haute (5) selon l'une des revendications 1 à 8 d'un véhicule à moteur (PKW), dans lequel l'afficheur tête haute (5) comprend un dispositif d'affichage (8, 50) destiné à générer une image et un dispositif optique (7) destiné à générer une image virtuelle à partir de l'image du dispositif d'affichage (8, 50), **caractérisé en ce qu'**il comprend les étapes suivantes :
- injection de lumière d'une première couleur dans un premier guide d'ondes lumineuses (11-14) et dans un deuxième guide d'ondes lumineuses (11-14, 51), qui sont disposés assez près l'un de l'autre derrière l'affichage du dispositif d'affichage (8, 50) affichant l'image pour éclairer sensiblement tout l'affichage par l'arrière sur toute sa surface avec la première couleur, et qui sont séparés l'un de l'autre par une couche (26-29, 52) qui ne laisse pas passer et/ou ne réfléchit pas la lumière, et
- changement de la couleur de la lumière injectée dans le deuxième guide d'ondes lumineuses (11-14, 51) de la première couleur à une deuxième couleur différente de la première couleur en fonction d'un signal émis par un dispositif de commande (25) du véhicule (PKW), de sorte qu'une zone de l'affichage associée au premier guide d'ondes lumineuses (11-14) est éclairée par l'arrière avec la première couleur et une zone de l'affichage associée au deuxième guide d'ondes lumineuses (11-14, 51) avec la deuxième couleur.

10. Procédé selon la revendication 9, **caractérisé en ce que** la couche (26-29, 52) est un film mince ou est appliquée par impression à l'encre.

11. Procédé selon la revendication 9 ou 10, **caractérisé en ce que** l'affichage est un écran à cristaux liquides (9).
